# EUROPÄISCHE PATENTSCHRIFT

(11) **EP 0 821 015 B1**
(45) Veröffentlichungstag und Bekanntmachung des Hinweises auf die Patenterteilung: **20.10.1999**
(21) Anmeldenummer: 97112047.2
(22) Anmeldetag: 15.07.1997
(51) Int. Cl.: C08F 20/12

(54) **Verfahren zur Herstellung von Polyacrylaten**
Process for preparing polyacrylates
Procédé de préparation de polyacrylates

(30) Priorität: 23.07.1996 DE 19629649
(43) Veröffentlichungstag der Anmeldung: 28.01.1998
(73) Patentinhaber: BASF AKTIENGESELLSCHAFT, 67056 Ludwigshafen (DE)
(72) Erfinder: Jüngling, Stephan, Dr., 68165 Mannheim (DE); Mehler, Christof, Dr., 67061 Ludwigshafen (DE); Schlaad, Helmut, 55545 Bad Kreuznach (DE); Schmitt, Bardo, 55120 Mainz (DE); Mueller, Axel, Dr., 65193 Wiesbaden (DE); Weiss, Horst, Dr., 76139 Karlsruhe (DE); Steiger, Suzanne, 67354 Römerberg (DE)

(56) Entgegenhaltungen:
- EP-A- 0 686 647
- DE-A- 19 530 398

## Beschreibung

Die vorliegende Erfindung betrifft ein Verfahren zur Herstellung von Polyacrylaten auf der Basis von Alkylacrylaten oder Alkylalkylacrylaten oder deren Mischungen als Monomeren in Gegenwart einer Starterzusammensetzung enthaltend ein Alkaliesterenolat und eine organische Aluminiumverbindung. Darüberhinaus betrifft die vorliegende Erfindung die Starterzusammensetzung sowie ein Verfahren zur Herstellung der Starterzusammensetzung und deren Verwendung.

Die anionische Polymerisation von Acrylaten wie Methylmethacrylat ist schwierig, da die Carbonylgruppe vielfältige Nebenreaktionen hervorruft. Es wurden deshalb bereits eine Reihe von Methoden entwickelt, mit dem Ziel die Polymerisation besser steuern zu können (J.M.S.-Rev. Macromol. Chem. Phys., C34(2), 243-324(1994)).

So wurde beispielsweise der Mechanismus der Polymerisation von (Meth)acrylaten in Gegenwart von Aluminiumalkyl in Toluol untersucht (Macromol. Rapid Commun. 15, 517-525(1994)). Dabei diente das System Methylpivalat/Aluminiumalkyl als Modell für die Umsetzung von Aluminiumalkyl mit Methylmethacrylat. Ebenso wurde die Polymerisation von Alkylacrylaten in Gegenwart von Alkyllithium und Aluminiumalkyl in Toluol diskutiert. Allerdings ist die Geschwindigkeit dieser Reaktion für technische Zwecke zu niedrig.

Aus der DE-A 195 30 398 ist die anionische Polymerisation von Alkylmethacrylaten in Gegenwart von Organolithium, einer organischen Aluminiumverbindung und Pyridin als Starterzusammensetzung bekannt. Zwar kann mittels dieser Starterzusammensetzung die Polymerisation relativ gut kontrolliert werden, jedoch verursacht das Pyridin Probleme bei der Aufarbeitung der Reaktionsmischung. Aufgrund seiner Giftigkeit ist Pyridin auch in geringen Mengen im Produkt insbesondere dann nicht erwünscht, sollen die Endprodukte beispielsweise im Haushalts- oder Spielwarensektor eingesetzt werden.

Ein weit verbreitetes Problem bei der anionischen Polymerisation von Acrylaten in Gegenwart von Alkyllithium und Aluminiumalkylverbindungen ist, daß sich Gele ausbilden, die vermutlich dadurch entstehen, daß mehrere Moleküle (Monomere oder schon gebildete Polymerketten) an den Metallzentren koordinieren. Dieses Phänomen führt dazu, daß sich zum einen die Reaktionsmischung schlecht handhaben läßt, zum anderen die Molekulargewichtsverteilung der Polyalkylacrylate breit ist und häufig kein vollständiger Monomerumsatz erreicht wird.

Aufgabe der vorliegenden Erfindung war es deshalb, eine neue Starterzusammensetzung zu entwickeln, die eine gute Kontrolle der Polymerisationsreaktion erlaubt. Insbesondere sollte ein Verfahren zur Verfügung gestellt werden, daß auch bei höheren Temperaturen zu Produkten mit enger Molekulargewichtsverteilung führt. Ferner sollten möglichst quantitative Umsätze erreicht und Blockcopolymere hergestellt werden können. Außerdem sollte die Reaktionsgeschwindigkeit für technische Zwecke geeignet sein. Darüberhinaus war es die Aufgabe, ein Verfahren zu finden, das weitgehend unempfindlich gegen die in Monomeren und Lösungsmitteln technischer Qualität vorhandenen Verunreinigungen ist. Des weiteren sollte ein Verfahren entwickelt werden, bei dem die Gelbildung vermieden wird.

Demgemäß wurde ein Verfahren zur Herstellung von Polyacrylaten auf der Basis von Alkylacrylaten oder Alkylalkylacrylaten oder deren Mischungen als Monomere in Gegenwart einer Starterzusammensetzung, enthaltend ein Alkaliesterenolat oder deren Mischungen und eine organische Aluminiumverbindung gefunden, bei dem in der Starterzusammensetzung ein von den Monomeren verschiedener Ester mitverwendet wird, dessen zu der Estergruppe α-ständiges Kohlenstoffatom kein acides Proton aufweist. Weitere Ausführungsformen sind den Ansprüchen und der Beschreibung zu entnehmen.

Als Polyacrylate kommen sowohl Homopolymere als auch Copolymere oder Blockcopolymere in Betracht. Beispielsweise können aus Mischungen unterschiedlicher Alkylacrylate oder unterschiedlicher Alkylalkylacrylate oder Mischungen aus Alkylacrylaten mit Alkylalkylacrylaten Copolymere hergestellt werden. Blockcopolymere können z.B. aus unterschiedlichen Alkylacrylaten oder unterschiedlichen Alkylalkylacrylaten oder aus Alkylacrylaten und Alkylalkylacrylaten erhalten werden. Nach dem erfindungsgemäßen Verfahren können sowohl Zweiblockcopolymere als auch Mehrblockcopolymere hergestellt werden. Dabei kann die Gewichtszusammensetzung der Blöcke in weiten Grenzen variieren.

Zu den geeigneten Alkylalkylacrylaten zählen solche mit 1 bis 20 C-Atomen, bevorzugt 1 bis 10, insbesondere 1 bis 6 C-Atomen im Esterrest. Der Esterrest kann sowohl linear als auch verzweigt sein. Ebenso kann der Esterrest ein Cycloalkylrest sein. Bevorzugt ist er linear. Die Alkylgruppe im Acrylatrest hat im allgemeinen 1 bis 10 C-Atome, bevorzugt 1 bis 6, insbesondere 1 bis 3 C-Atome. Die Alkylgruppe im Acrylatrest kann sowohl linear als auch verzweigt sein, bevorzugt ist sie linear. Besonders bevorzugt ist die Methylgruppe. Die Alkylalkylacrylate können auch mit einem oder mehreren Halogenatomen substituiert sein. Als Beispiele werden genannt: Methylmethacrylat, Ethylmethacrylat, 2,2,2,-Trifluorethylmethacrylat, n-Propylmethacrylat, 1-Propylmethacrylat, n-Butylmethacrylat, s-Butylmethacrylat, t-Butylmethacrylat, n-Pentylmethacrylat, i-Pentylmethacrylat, n-Hexylmethacrylat, 2-Ethylhexylmethacrylat, Cyclohexylmethacrylat, n-Octylmethacrylat, n-Decylmethacrylat, Dihydrodicyclopentadienylmethacrylat. Besonders bevorzugt wird Methylmethacrylat verwendet.

Unter den Alkylacrylaten sind C₁- bis C₂₀-Alkylacrylate bevorzugt. Besonders bevorzugt werden C₁- bis C₁₀-, insbesondere C₁- bis C₈-Alkylacrylate. Die Alkylreste können sowohl linear als auch verzweigt sein oder einen Ring bilden. Beispielsweise können Methylacrylat, Ethylacrylat, n-Propylacrylat, i-Propylacrylat, n-Butylacrylat, i-Butylacrylat, t-Butylacrylat, n-Pentylacrylat, i-Pentylacrylat, n-Hexylacrylat, 2-Ethylhexylacrylat, Cyclohexylacrylat, n-Octylacrylat, n-Decylacrylat, Dihydrodicyclodihydropentadienylacrylat eingesetzt werden.

Unter den Blockcopolymerisaten sind solche bevorzugt, die aus Methylmethacrylat- und n-Butylacrylatblöcken, t-Butylacrylatblöcken t-Butylmethacrylat oder 2-Ethylhexylacrylatblöcken insbesondere aus Methylmethacrylat und t-Butylmethacrylat aufgebaut sind.

Erfindungsgemäß enthält die Starterzusammensetzung Alkaliesterenolat oder eine Mischung unterschiedlicher derartiger Enolate. Als Alkalimetall sind Lithium, Natrium oder Kalium bevorzugt. Die Wahl des Alkalimetalls beeinflußt unter anderem die Reaktionsgeschwindigkeit der Polymerisationsreaktion, sodaß sich die Wahl des Metalls nach den umzusetzenden Monomeren und der gewünschten Reaktionsgeschwindigkeit richtet. Im allgemeinen werden Lithiumenolate bevorzugt.

Die Alkalienolate, die erfindungsgemäß in der Starterzusammensetzung enthalten sind, können getrennt hergestellt und als solche eingesetzt werden.

Die Herstellung von Alkalienolaten ist an sich bekannt. Sie lassen sich beispielsweise dadurch herstellen, daß ein Alkalisalz, eine Alkylalkaliverbindung oder ein Alkalimetall mit einem Ester, der mindestens ein acides Proton am α-Kohlenstoffatom aufweist, umgesetzt wird. Selbstverständlich können auch Diester zu den erfindungsgemäß enthaltenen Alkaliesterenolaten umgesetzt werden. Anschließend können die so erhaltenen Alkalienolate isoliert und gereinigt werden.

Zur Herstellung der Alkalienolate sind Ester der allgemeinen Formeln I oder II bevorzugt: 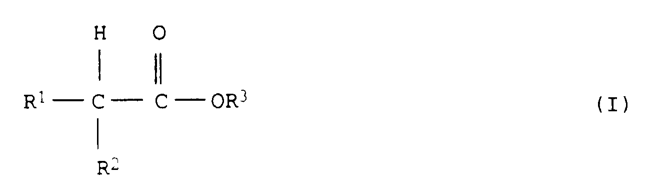 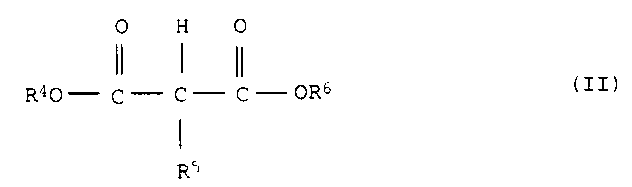 worin die Reste R¹ bis R⁶ gleich oder verschieden voneinander sein können und unabhängig voneinander einen C₁- bis C₁₀-Alkyl oder C₆-bis C₁₈-Arylrest bedeuten. Die Reste R¹, R² und R⁵ können ferner auch für Wasserstoff stehen. Die Alkylreste können sowohl linear als auch verzweigt sein. Bevorzugte Ester I oder II enthalten als Reste R³, R⁴ und R⁶ C₁- bis C₅-Alkylreste wie Methyl, Ethyl, n-Propyl, i-Propyl, n-Butyl, i-Butyl oder t-Butyl, worunter Methyl oder t-Butyl besonders bevorzugt sind. Die Reste R¹, R² und R⁵ sind bevorzugt C₁- bis C₈-Alkylreste, worunter Methyl, Ethyl, i-Butyl und 2,2-Dimethylpentyl besonders bevorzugt sind.

Aus Estern der allgemeinen Formel I ist beispielsweise Lithiummethylisobutyrat oder Lithium-t-butyl-isobutyrat zugänglich. Aus den Estern der allgemeinen Formel I läßt sich auch z.B. 2-Lithium-2,4,4-trimethylpentansäuremethylesterenolat herstellen. Lithiumalkylmalonate wie 2-Lithium-2-C₁- bis C₅-alkyl-1,3-propandicarbonsäuredialkylesterenolate, insbesondere 2-Lithium-2-ethyl-1,3-propandicarbonsäuredimethylesterenolat, können aus dem Ester der allgemeinen Formel III hergestellt werden.

Es können auch unterschiedliche Alkaliesterenolate eingesetzt werden, sodaß in der Starterzusammensetzung unterschiedliche Alkaliesterenolate enthalten sind.

Alternativ und wie es bevorzugt wird, ist es möglich, die Alkaliesterenolate in situ zu erzeugen.

Hierzu geht man erfindungsgemäß von einer Alkyl- oder Alkylarylalkaliverbindung aus. Deren Alkylrest weist in der Regel 1 bis 10, bevorzugt 1 bis 6 C-Atome auf und kann linear, verzweigt oder cyclisch sein. Der Alkylarylrest hat im allgemeinen 1 bis 10, bevorzugt 1 bis 6 C-Atome in der Alkylgruppe. Die Alkylgruppe kann einen oder mehrere Arylreste enthalten. Als Arylrest kommen sowohl monocyclische als auch polycyclische Arylreste in Betracht, die in der Regel 6 bis 18 C-Atome haben. Bevorzugter Arylrest ist Phenyl. Alkylarylalkaliverbindungen sind beispielsweise durch Umsetzen von Styrol oder substituierten Styrolen wie α-Methylstyrol oder 1,1-Diphenylethan oder kernalkylierten Styrolen mit einer Alkylalkaliverbindung, beispielsweise n-Butyllithium, s-Butyllithium oder t-Butyllithium zugänglich. Anstelle von Styrol oder dessen Derivaten können auch oligomere oder Polymere dieser Verbindungen verwendet werden. Vertreter der Alkyl- oder Alkylarylalkaliverbindungen sind beispielsweise n-Butyllithium, s-Butyllithium, t-Butyllithium, Diphenylmethyllithium, Diphenylmethylnatrium, Diphenylmethylkalium, 1,1,4,4-Tetraphenylbutan-1,4-dilithium, 1,1,4,4-Tetraphenylbutan-1,4-dinatrium, 1,1,4,4-Tetraphenylbutan-1,4-dikalium, 1-Phenylhexyllithium 1,1-Diphenylhexyllithium, 3-Methyl-1-phenylpentyllithium, 1,3-Dimethyl-1-phenylpentyllithium oder 3-Methyl-1,1-diphenylpentyllithium.

Zur Herstellung des Alkaliesterenolats wird die jeweilige Alkyl- oder Alkylarylalkaliverbindung vor der Umsetzung der Hauptmenge an Monomeren mit einer stöchiometrischen Menge eines Alkylalkylacrylates umgesetzt. Unter stöchiometrischer Menge werden erfindungsgemäß Mengen von Alkyl- oder Alkylarylalkaliverbindung zu Monomer im molaren Verhältnis von 1 : 0,8 bis 1 : 2 verstanden. Bevorzugt beträgt das molare Verhältnis der Alkaliverbindung zu Monomer von 1 : 0,9 bis 1 : 1,5. Besonders bevorzugt werden äquimolare Mengen. Es können auch unterschiedliche Alkyl- oder Alkylarylacrylate verwendet werden. Ebenso ist es möglich unterschiedliche Alkylalkylacrylate zu verwenden, sodaß in der Starterzusammensetzung unterschiedliche Alkaliesterenolate enthalten sind.

Neben einem Alkaliesterenolat enthält die Starterzusammensetzung erfindungsgemäß eine organische Aluminiumverbindung. Daneben ist es erfindungsgemäß auch möglich unterschiedliche Aluminiumverbindungen einzusetzen. Bevorzugt werden Aluminiumalkylverbindungen. Die Alkylreste am Aluminium können gleich oder verschieden sein und enthalten im allgemeinen von 1 bis 10, bevorzugt 1 bis 6 C-Atome. Sie können linear oder verzweigt aber auch cyclisch sein. Beispielhaft können als Aluminiumverbindungen Trimethylaluminium, Triethylaluminium, Tri-i-propylaluminium, Triisobutylaluminium, Tri(neopentyl)aluminium oder Tri(norborneyl)aluminium genannt werden.

Gemäß der Erfindung enthält die Starterzusammensetzung einen Ester. Dieser ist von den als Monomeren eingesetzten Alkylalkylacrylaten verschieden und hat erfindungsgemäß kein acides Proton an dem Kohlenstoffatom, der zur Estergruppe α-ständig ist. Erfindungsgemäß wird unter diesem Ester auch eine Mischung unterschiedlicher derartiger Ester verstanden. Die Ester, die in der Starterzusammensetzung enthalten sind, können sowohl eine als auch mehrere, beispielsweise zwei, Estergruppen im Molekül aufweisen. Im allgemeinen sind diese Ester monomere Verbindungen. Es kommen sowohl aliphatische als auch aromatische Ester in Betracht. Auch können Ester verwendet werden, die sich von einer aliphatischen Säure und einem aromatischen Alkohol oder umgekehrt ableiten.

Bevorzugt werden Pivalinsäureester (2,2-Dimethylpropansäureester), darunter C₁- bis C₁₀-Alkylpivalat, wie Methylpivalat, Ethylpivalat, n-Propylpivalat, i-Propylpivalat, n-Butylpivalat, i-Butylpivalat, t-Butylpivalat, n-Hexylpivalat oder Cyclohexylpivalat. Weitere bevorzugte Ester, die in der Starterzusammensetzung enthalten sein können, sind Benzoesäureester wie C₁- bis C₁₀-Alkylbenzoate. Zu den Benzoaten, die erfindungsgemäß verwendet werden können zählen Methylbenzoat, Ethylbenzoat, n-Propylbenzoat, i-Propylbenzoat, n-Butylbenzoat, i-Butylbenzoat, t-Butylbenzoat, n-Hexylbenzoat oder Cyclohexylbenzoat. Darüberhinaus können beispielsweise Phthalsäureester wie C₁- bis C₃₀-Dialkylphthalsäureester bevorzugt C₁- bis C₂₀-Dialkylphthalsäureester als Ester in der Starterzusammensetzung verwendet werden, worunter Phthalsäuredialkylester bevorzugt werden, deren Alkylreste gleich sind. Dimethylphthalat, Diethylphthalat, Di-n-propylphthalat, Di-i-propylphthalat, Di-n-butylphthalat, Di-i-butylphthalat, Di-n-hexylphthalat, Dicyclohexylphthalat, Di-n-octylphthalat oder Di-i-octylphthalat (Di-(2-ethylhexyl)phthalat).

Besonders bevorzugt werden Pivalinsäuremethylester, Benzoesäuremethylester oder Phthalsäuredi-i-octylester (Phthalsäure-di-(2-ethylhexylester).

Je nach gewünschtem Polymerisationsergebnis oder gewünschten Polymerisationsparametern wie Geschwindigkeit der Reaktion kann die Zusammensetzung des Starters in weiten Grenzen variieren. Im allgemeinen enthält die Starterzusammensetzung das Alkaliesterenolat, die Aluminiumverbindung und den Ester in molaren Verhältnissen von 1 : 0,5 bis 10 : 1 bis 1000. Bevorzugt sind molare Verhältnisse von 1 : 1 bis 5 : 10 bis 200, insbesondere von 1 : 2 bis 4 : 20 bis 100.

In der Regel wird das Alkaliesterenolat zum Monomer in molaren Verhältnissen im Bereich von 1 : 5 bis 1 : 10000 eingesetzt. Bevorzugte molare Verhältnisse von Alkaliesterenolat zu Monomer liegen im Bereich von 1 : 10 bis 1 : 5000, insbesondere von 1 : 50 bis 1 : 3000.

Die Polymerisation kann sowohl in Abwesenheit als auch in Gegenwart eines Lösungsmittels ausgeführt werden. Im allgemeinen wird die Polymerisation in einem Lösungsmittel ausgeführt. Bevorzugt werden unpolare Lösungsmittel verwendet. Hierzu zählen aromatische Kohlenwasserstoffe wie Toluol, Benzol, Xylol oder Ethylbenzol. Es können aber auch Mischungen unterschiedlicher unpolarer Lösungsmittel wie Mischungen aus Toluol mit Ethylbenzol oder Mischungen aromatischer und aliphatischer Kohlenwasserstoffe, z.B. Cyclohexan, Hexan oder Pentan verwendet werden. Bevorzugtes Lösungsmittel ist Toluol oder Ethylbenzol. Vorzugsweise werden Lösungsmittel eingesetzt, deren Sauerstoffgehalt reduziert ist.

Die Umsetzung der Monomeren kann bei unterschiedlichen Verdünnungsgraden durchgeführt werden. Beispielsweise kann der Gewichtsanteil der Monomeren im Gesamtansatz im Bereich von 0,5 bis 80 %, bevorzugt von 1 bis 50 % betragen.

Prinzipiell können die Komponenten der Starterzusammensetzung, das Lösungsmittel und die Monomeren in unterschiedlichster Reihenfolge miteinander gemischt werden. Beispielsweise können alle Starterkomponenten vorgelegt werden und Lösungsmittel und Monomerzugabe anschließend erfolgen. Es können aber auch einige der Starterkomponenten zunächst eingesetzt werden und einige andere Starterkomponenten später zugegeben werden. Auch ist es möglich während der Polymerisationsreaktion weitere Mengen an Starterzusammensetzung zuzugeben. Vorzugsweise jedoch wird das Lösungsmittel vorgelegt und zunächst mit der Aluminiumverbindung versetzt. Zu dieser Mischung kann dann das Alkalienolat, das getrennt hergestellt wurde, gegeben werden. Alternativ kann, wie bereits oben beschrieben, eine Alkyl- oder Alkylarylalkaliverbindung zugesetzt und anschließend durch Umsetzten mit einer stöchiometrischen Menge eines Alkylalkylacrylates in situ in das Alkalienolat überführt werden. Im allgemeinen wird danach der Ester zugegeben. Schließlich erfolgt nach einer bevorzugten Ausführungsform die Monomerzugabe. Bevorzugt werden Vormischungen aus Ester und Aluminiumverbindung sowie Monomer und Aluminiumverbindung hergestellt. Im allgemeinen betragen die molaren Verhältnisse von Ester oder Monomer zur Aluminiumverbindung in diesen Vormischungen von 100 bis 1000 : 1. Die einzelnen Komponenten der Starterzusammensetzung können dabei als solche eingesetzt werden. Ebenso ist es möglich die Komponenten der Starterzusammensetzung gelöst oder dispergiert in einem der genannten Lösungsmittel oder Lösungsmittelmischungen einzusetzen. Bevorzugt werden die Komponenten jeweils gelöst in Pentan, Hexan, Toluol, Ethylbenzol oder Cyclohexan verwendet. Es kommt in Betracht, die gesamte Monomerenmenge auf einmal, stufenweise oder kontinuierlich zuzugeben.

Die Umsetzung kann beispielsweise bei einer Temperatur im Bereich von -78 bis +50°C durchgeführt werden. Bevorzugt wird ein Temperaturbereich von -30 bis +30°C, insbesondere von -20 bis 0°C. Während der Umsetzung kann die Temperatur entweder nahezu konstant gehalten werden oder die Umsetzung kann einem Temperaturprogramm unterworfen werden.

Nach erfolgtem Molekulargewichtsaufbau wird die Polymerisationsreaktion in der Regel durch Zugabe einer protischen Substanz wie einem protischen Lösungsmittel, z.B. einem Alkohol wie Methanol oder Ethanol oder Essigsäure, Ameisensäure, Salzsäure oder Wasser oder einer Mischung dieser Lösungsmittel abgebrochen.

Das Reaktionsgemisch kann dann beispielsweise nach an sich bekannten Methoden aufgearbeitet werden. So kann das erhaltene Polyacrylat beispielsweise mittels eines niederen Alkohols oder Wasser ausgefällt werden oder das Lösungsmittel aus der Reaktionsmischung entfernt werden.

Die nach dem erfindungsgemäßen Verfahren erhältlichen Polyacrylate, bevorzugt Polymethylmethacrylate, weisen im allgemeinen Molekulargewichte (Zahlenmittelwerte Mₙ) im Bereich von 5000 bis 1000000, bevorzugt im Bereich von 5000 bis 300000 g/mol auf. Da nach dem erfindungsgemäßen Verfahren Gelbildung nicht bzw. nur in untergeordnetem Maße auftritt, haben sie eine enge Molekulargewichtsverteilung, angegeben als Verhältnis von Gewichtsmittel zu Zahlenmittel M_{w}/Mₙ. In der Regel liegt M_{w}/Mₙ bei 0°C im Bereich von 1,05 bis 1,6, bevorzugt im Bereich von 1,05 bis 1,4. Außerdem werden nach dem erfindungsgemäßen Verfahren Polyacrylate auf der Basis von Alkylalkylacrylaten hoher Syndiotaktizität erhalten. Der Anteil der syndiotaktischen Triaden rr in diesen Polyacrylaten beträgt im allgemeinen von 50 bis 85, bevorzugt von 60 bis 80 %.

Das erfindungsgemäße Verfahren zeichnet sich zum einen dadurch aus, daß die Prozeßparameter wie Reaktionsgeschwindigkeit und Temperatur gut kontrolliert werden können. Zum anderen können vollständige oder nahezu vollständige Umsätze erreicht werden. Außerdem ist das Verfahren wesentlich weniger empfindlich gegen Verunreinigungen, die in den Lösungsmitteln und Monomeren technischer Qualität vorhanden sind, als bekannte Verfahren.

### Beispiele

### Einsatzstoffe

- t-Butyllithium (tBuLi):: gelöst in Pentan
- Triethylaluminium (AlEt₃):: gelöst in Toluol
- Trimethylaluminium (AlMe₃):: gelöst in Toluol
- Pivalinsäuremethylester (MPiv):: über Calciumhydrid getrocknet, entgast und destilliert oder mit Stickstoff entgast und mittels Aluminiumoxid getrocknet
- Phthalsäuredi-i-octylester (DOP):: mit Stickstoff entgast, mittels Aluminiumoxid getrocknet
- Essigsäuremethylester (EM) Ethylformiat (EF) Toluol:: über Na/K-Legierung gerührt und destilliert
- Ethylbenzol:: mit Stickstoff entgast, mittels Aluminiumoxid getrocknet
- Methylmethacrylat (MMA):: mit Stickstoff entgast, mittels Aluminiumoxid getrocknet
- t-Butylmethacrylat (tBuMA):: mit Stickstoff entgast, mittels Aluminiumoxid getrocknet
- n-Butylacrylat (nBuA):: über Calciumhydrid getrocknet, entgast und destilliert
- Methanol:: mittels Stickstoff entgast
- Eisessig:: technisch

Die Molekulargewichte M_{n/theor.} ergibt sich aus dem Polymerisationsgrad, Pₙ, und der Molmasse der eingesetzten Monomeren, M_{Monomer} und wird aus dem Quotienten aus der eingesetzten Molmenge an Monomer, mol_{Monomer} und der eingesetzten Molmenge an Alkalienolat, mol_{Alkalienolat}, multipliziert mit der Molmasse des eingesetzten Monomeren: M_{n theor.} = Pₙ x M_{Monomer} = (mol_{Monomer}/mol_{Alkalienolat}) x M_{Monomer} berechnet.

Die Molekulargewichte M_{w} und Mₙ wurden durch Gelpermeationschromatographie (Polymethylmethacrylateichung) bestimmt.

Die Taktizität der erhaltenen Produkte wurde durch ¹H-NMR bestimmt.

### Beispiele 1 bis 5

Die Reaktion wurde unter Stickstoff durchgeführt.

### Herstellung der Starterzusammensetzung:

1,6 mmol AlEt₃ (in Toluol gelöst), 0,45 mmol tBuLi (in Pentan gelöst) und 68 ml Toluol wurden bei der in der Tabelle angegebenen Reaktionstemperatur gemischt und mit einer Lösung aus 0,55 mmol MMA in 5 ml Toluol versetzt. Es wurde 20 Minuten nachgerührt. Anschließend wurden 200 mmol destilliertes MPiv zugegeben.

Die so erhaltene Starterzusammensetzung wurde mit 23 mmol MMA versetzt und bei der in der Tabelle angegebenen Temperatur polymerisiert. Nach der in der Tabelle angegebenen Reaktionszeit wurde die Reaktion mit Methanol abgebrochen, das Lösungsmittel im Vakuum entfernt, der Rückstand in Benzol aufgenommen, filtriert und gefriergetrocknet.

### Beispiel 6

Die Starterzusammensetzung wurde wie unter Beispiel 1 bis 5 beschrieben bei der in der Tabelle angegebenen Temperatur hergestellt. Allerdings wurde eine Mischung aus 200 mmol nicht destilliertem MPiv mit 0,1 ml 1,9 molarer AlEt₃-Lösung in Toluol anstelle des destillierten MPiv eingesetzt.

Anschließend wurden 115 mmol MMA zugegeben und bei der angegebenen Temperatur polymerisiert.

Nach dem in der Tabelle angegebenen Zeit wurde die Reaktion durch Zugabe von Methanol abgebrochen und das Produkt mittels HCl-saurem Methanol ausgefällt, abfiltriert und im Vakuum getrocknet.

### Beispiel 7

Die Starterzusammensetzung wurde wie in Beispiel 6 beschrieben hergestellt, jedoch wurden anstelle des Toluols 77,6 ml Ethylbenzol verwendet. Anschließend wurden 23 mmol MMA zugegeben und die Reaktionsmischung 2,5 Stunden gerührt. Danach wurden weitere 23 mmol MMA zugegeben und eine Stunde nachgerührt. Die Aufarbeitung erfolgte wie unter Beispiel 6 beschrieben.

### Beispiel 8

Der Versuch wurde wie in Beispiel 6 beschrieben ausgeführt, jedoch wurden anstelle der Mischung aus MPiv und AlEt₃ eine Mischung aus 50 mmol DOP und 0,05 ml einer 1,9 molaren Lösung von AlEt₃ in Toluol eingesetzt und anstelle der 115 mmol MMA 23 mmol MMA verwendet.

### Beispiele 9 und 10

Die Versuche wurden wie unter Beispiel 8 beschrieben bei den in der Tabelle angegebenen Temperaturen ausgeführt, jedoch wurden anstelle des Toluols 77,6 ml Ethylbenzol verwendet.

### Beispiele 11 und 12

Die Versuche wurden wie unter Beispiel 8 beschrieben bei den in der Tabelle angegebenen Temperaturen ausgeführt. Allerdings wurde anstelle einer Lösung aus MMA in Toluol eine Mischung aus 23 mmol MMA und 0,1 ml einer 1,9 molaren Lösung von AlEt₃ in Toluol eingesetzt.

### Beispiel 13

Der Versuch wurde wie unter Beispiel 6 beschrieben ausgeführt, jedoch wurden für die Herstellung der Starterzusammensetzung tBMA anstelle von MMA verwendet und anstelle der 115 mmol MMMA wurden 23 mmol tBMA polymerisiert.

### Vergleichsbeispiel V1

Der Versuch wurde wie unter Beispiel 1 angegeben durchgeführt. Allerdings wurde kein MPiv mitverwendet.

### Vergleichsbeispiel V2

Der Versuch wurde wie unter Beispiel 4 beschrieben durchgeführt. Allerdings wurde anstelle von MPiv Essigsäuremethylester (EM) eingesetzt.

### Vergleichsbeispiel V3

Der Versuch wurde wie unter Beispiel 4 beschrieben durchgeführt, jedoch wurde anstelle von MPiv Ethylformiat (EF) verwendet.

Einzelheiten der Versuchsdurchführung sowie die Charakterisierung der Produkte sind der folgenden Tabelle zu entnehmen.

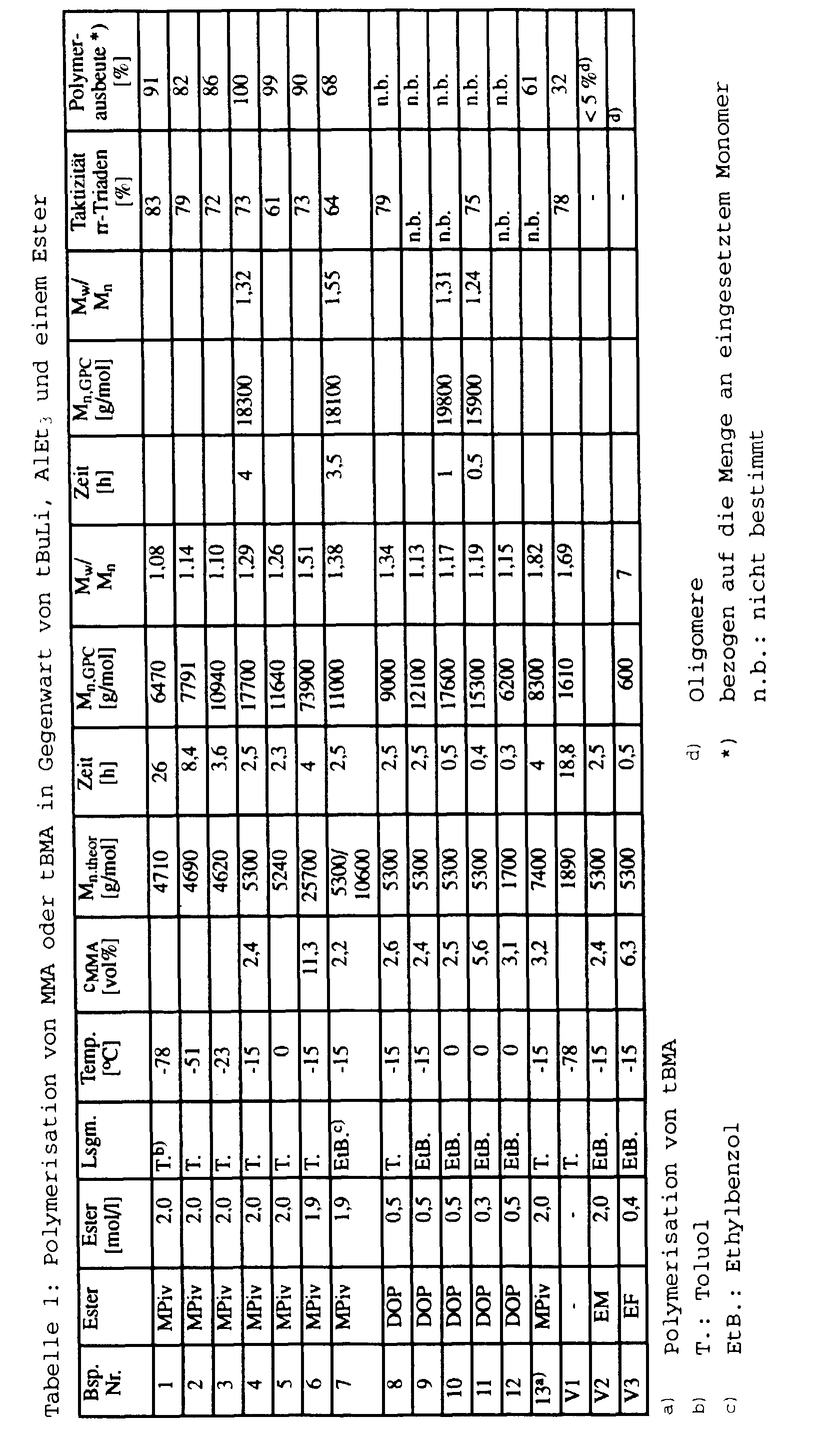

### Herstellung von Blockcopolymeren aus MMA und tBMA

### Beispiel 14

In einem ersten Schritt wurden eine Mischung aus 71 mmol MMA und 0,2 mmol einer 1,9 molaren Lösung von AlEt₃ in Toluol hergestellt und das MMA wurde wie unter Beispiel 11 angegeben polymerisiert. Nach der in der Tabelle 2 angegebenen Zeit wurde eine Mischung aus 46 mmol tBMA und 0,3 ml einer 1,9 molaren AlEt₃-Lösung in Toluol zugegeben. Es wurde bei 0^{o}C für die in der Tabelle 2 angegebene Zeit nachgerührt.

### Beispiel 15

Der Versuch wurde wie unter Beispiel 14 beschrieben durchgeführt, allerdings wurden eine Mischung aus 71 mmol MMA und 0,3 ml einer 1,9 molaren Lösung aus AlEt₃ in Toluol und eine Mischung aus 46 mmol tBMA und 0,3 ml einer 1,9 molaren Lösung aus AlEt₃ in Toluol verwendet.

Die Ergebnisse sind Tabelle 2 zu entnehmen.

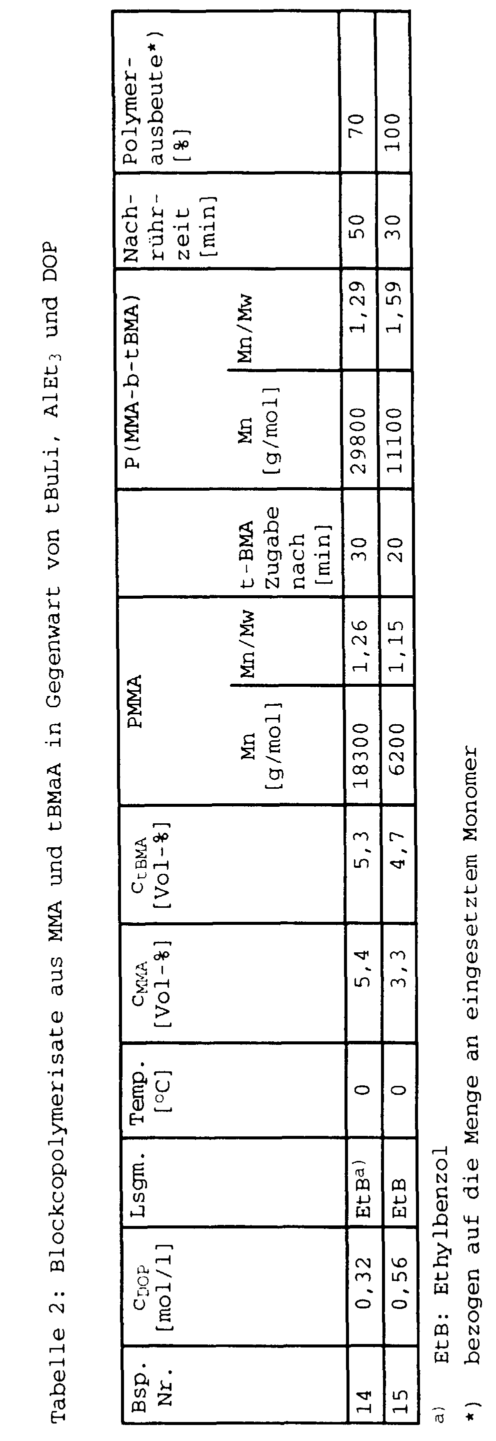

### Beispiel 16 und 17

Zu einer Mischung aus 3,2 mmol AlMe3 und 0,9 mmol tBuLi in 95 ml Toluol wurden 1,1 mmol MMA gelöst in 5 ml Toluol zugegeben und bei 0°C 20 Minuten gerührt. Anschließend wurde auf die in der Tabelle 3 angegebene Reaktionstemperatur gekühlt. Bei dieser Temperatur wurde eine Mischung aus 46 mmol nBuA und 400 mmol MPiv in 45 ml Toluol zugemischt. Nach der in der Tabelle 3 angegebenen Zeit wurde die Polymerisationsreaktion mit einer Mischung aus Methanol und Eisessig abgebrochen, das Lösungsmittel im Vakuum entfernt, der Rückstand in Benzol aufgenommen, filtriert und gefriergetrocknet.

### Vergleichsbeispiel V4

Der Versuch wurde wie unter Beispiel 16 und 17 beschrieben ausgeführt, jedoch in Abwesenheit von MPiv.

Die Ergebnisse sind Tabelle 3 zu entnehmen.

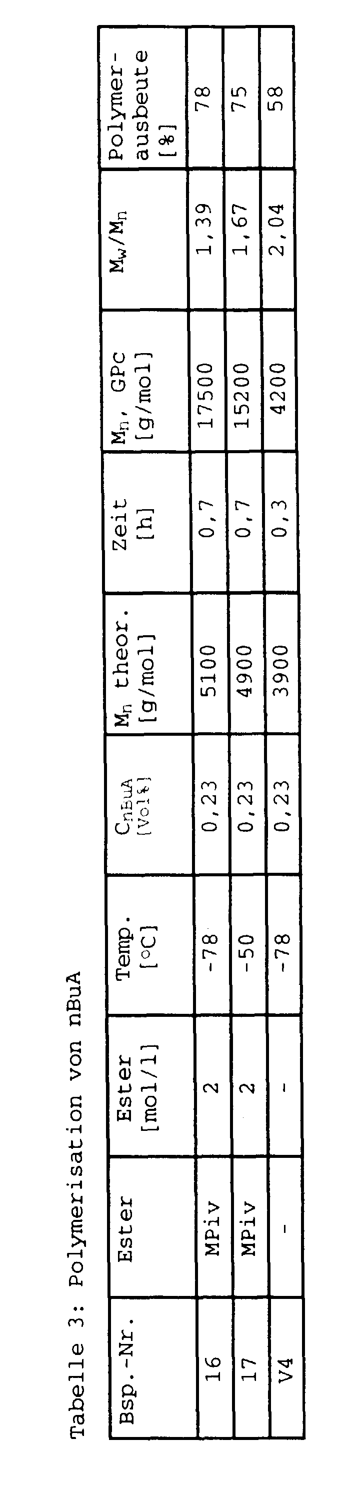

## Patentansprüche

1. Verfahren zur Herstellung von Polyacrylaten auf der Basis von Alkylacrylaten oder Alkylalkylacrylaten oder deren Mischungen als Monomeren in Gegenwart einer Starterzusammensetzung enthaltend ein Alkaliesterenolat und eine organische Aluminiumverbindung dadurch gekennzeichnet, daß man in der Starterzusammensetzung einen von den Monomeren verschiedenen Ester mitverwendet, wobei das zu der Estergruppe α-ständige Kohlenstoffatom kein acides Proton aufweist.

2. Verfahren nach Anspruch 1, dadurch gekennzeichnet, daß man als Ester in der Starterzusammensetzung einen Pivalinsäureester, Benzoesäureester oder Phthalsäureester einsetzt.

3. Verfahren nach Anspruch 1 oder 2, dadurch gekennzeichnet, daß man als Ester in der Starterzusammensetzung Pivalinsäuremethylester, Benzoesäuremethylester oder Phthalsäuredi-i-octylester verwendet.

4. Verfahren nach einem der Ansprüche 1 bis 3, dadurch gekennzeichnet,daß man die Polymerisationsreaktion in einem unpolaren Lösungsmittel durchführt.

5. Verfahren zur Herstellung von Polyacrylaten, gemäß einem der Ansprüche 1 bis 4, dadurch gekennzeichnet, daß man ein Alkaliesterenolat mit der Aluminiumverbindung und dem Ester mischt und anschließend die Monomeren zugibt.

6. Verfahren zur Herstellung von Polyacrylaten, gemäß einem der Ansprüche 1 bis 4, dadurch gekennzeichnet, daß man in einem ersten Schritt eine Alkyl- oder eine Alkylarylalkaliverbindung oder deren Mischungen mit der Aluminiumverbindung mischt, in einem zweiten Schritt eine zur Alkaliverbindung stöchiometrische Menge eines Alkylalkylacrylates zugibt, in einem dritten Schritt den Ester zufügt und in einem weiteren Schritt die restliche Menge an Monomeren zugibt.

7. Starterzusammensetzung enthaltend ein Alkaliesterenolat, eine organische Aluminiumverbindung und einen von Alkylalkylacrylaten verschiedenen Ester, der kein acides Proton an dem zur Estergruppe α-ständigen Kohlenstoffatom hat.

8. Verfahren zur Herstellung einer Starterzusammensetzung gemäß Anspruch 7, dadurch gekennzeichnet, daß man in einem ersten Schritt eine Alkyl- oder eine Alkylarylalkaliverbindung oder deren Mischungen mit der Aluminiumverbindung mischt, in einem zweiten Schritt eine zur Alkaliverbindung stöchiometrische Menge eines Alkylalkylacrylates zugibt und in einem dritten Schritt den Ester zufügt.

9. Verwendung der Starterzusammensetzung gemäß Anspruch 7 zur Herstellung von Polyacrylaten gemäß einem der Ansprüche 1-6.

## Claims

1. A process for the preparation of polyacrylates based on alkyl acrylates or alkyl alkylacrylates or mixtures thereof as monomers in the presence of an initiator composition containing an alkali metal ester enolate and an organic aluminum compound, wherein an ester which differs from the monomers is present in the initiator composition, the carbon atom α to the ester group having no acidic proton.

2. A process as claimed in claim 1, wherein the ester used in the initiator composition is a pivalic ester, benzoic ester or phthalic ester.

3. A process as claimed in claim 1 or 2, wherein the ester used in the initiator composition is methyl pivalate, methyl benzoate or diisooctyl phthalate.

4. A process as claimed in any of claims 1 to 3, wherein the polymerization reaction is carried out in a nonpolar solvent.

5. A process for the preparation of polyacrylates, as claimed in any of claims 1 to 4, wherein an alkali metal ester enolate is mixed with the aluminum compound and the ester, and the monomers are then added.

6. A process for the preparation of polyacrylates, as claimed in any of claims 1 to 4, wherein an alkyl- or alkylaryl-alkali metal compound or a mixture thereof is mixed with the aluminum compound in a first step, a stoichiometric amount, based on the alkali metal compound, of an alkyl alkylacrylate is added in a second step, the ester is added in a third step and the remaining amount of monomers is added in a further step.

7. An initiator composition containing an alkali metal ester enolate, an organic aluminum compound and an ester which differs from alkyl alkylacrylates and has no acidic proton on the carbon atom a to the ester group.

8. A process for the preparation of an initiator composition as claimed in claim 7, wherein an alkyl- or alkylaryl-alkali metal compound or a mixture thereof is mixed with the aluminum compound in a first step, a stoichiometric amount, based on the alkali metal compound, of an alkyl alkylacrylate is added in a second step and the ester is added in a third step.

9. The use of an initiator composition as claimed in claim 7 for the preparation of polyacrylates as claimed in any of claims 1-6.

## Revendications

1. Procédé de préparation de polyacrylates à base d'acrylates d'alkyle ou d'acrylates d'alkylalkyle ou de leurs mélanges, comme monomères, en présence d'une composition initiatrice contenant un esterénolate de métal alcalin et un composé d'aluminium organique, caractérisé en ce que, dans la composition initiatrice, on utilise conjointement un ester différent des monomères, l'atome de carbone en position α par rapport au groupe ester ne présentant pas de proton acide.

2. Procédé suivant la revendication 1, caractérisé en ce que, comme ester, on met en oeuvre dans la composition initiatrice un ester d'acide pivalique, un ester d'acide benzoïque ou un ester d'acide phtalique.

3. Procédé suivant l'une des revendications 1 et 2, caractérisé en ce que, comme ester, on utilise dans la composition initiatrice, du pivalate de méthyle, du benzoate de méthyle ou du phtalate de di-i-octyle.

4. Procédé suivant l'une des revendications 1 à 3, caractérisé en ce qu'on effectue la réaction de polymérisation dans un solvant non polaire.

5. Procédé de préparation de polyacrylates suivant l'une des revendications 1 à 4, caractérisé en ce qu'on mélange un esterénolate de métal alcalin avec le composé d'aluminium et l'ester et en ce qu'on ajoute ensuite les monomères.

6. Procédé de préparation de polyacrylates suivant l'une des revendications 1 à 4, caractérisé en ce que, dans une première étape, on mélange un composé d'alkyl-métal alcalin ou d'alkylaryl-métal alcalin ou leurs mélanges avec le composé d'aluminium, dans une deuxième étape, on ajoute une quantité stoechiométrique par rapport au composé de métal alcalin d'un acrylate d'alkylalkyle, dans une troisième étape, on ajoute l'ester et, dans une étape ultérieure, on ajoute la quantité restante de monomères.

7. Composition initiatrice contenant un esterénolate de métal alcalin, un composé d'aluminium organique et un ester différent des acrylates d'alkylalkyle, qui ne comporte pas de proton acide sur l'atome de carbone en position α par rapport au groupe ester.

8. Procédé de préparation d'une composition initiatrice suivant la revendication 7, caractérisé en ce que, dans une première étape, on mélange un composé d'alkyl-métal alcalin ou d'alkylaryl-métal alcalin ou leurs mélanges avec le composé d'aluminium, dans une deuxième étape, on ajoute une quantité stoechiométrique par rapport au composé de métal alcalin d'un acrylate d'alkylalkyle et, dans une troisième étape, on ajoute l'ester.

9. Utilisation de la composition initiatrice suivant la revendication 7 pour la fabrication de polyacrylates suivant l'une des revendications 1 à 6.
